(19) Europäisches Patentamt / European Patent Office / Office européen des brevets

(11) **EP 3 877 149 B1**

(12) **EUROPEAN PATENT SPECIFICATION**

(45) Date of publication and mention
of the grant of the patent:
**11.09.2024 Bulletin 2024/37**

(21) Application number: **19791109.2**

(22) Date of filing: **04.10.2019**

(51) International Patent Classification (IPC):
**B29C 64/106** *(2017.01)* **C08F 297/06** *(2006.01)*
**C08F 297/08** *(2006.01)* **B33Y 80/00** *(2015.01)*
**C08L 53/00** *(2006.01)*

(52) Cooperative Patent Classification (CPC):
**B29C 64/106; B33Y 80/00; C08F 297/083;
C08L 53/00**

(86) International application number:
**PCT/US2019/054603**

(87) International publication number:
**WO 2020/096718 (14.05.2020 Gazette 2020/20)**

(54) **ADDITIVE MANUFACTURING WITH AN OLEFIN BLOCK COPOLYMER AND ARTICLES MADE THEREFROM**

GENERATIVE FERTIGUNG MIT EINEM OLEFINBLOCKCOPOLYMER UND DARAUS HERGESTELLTE ARTIKEL

FABRICATION ADDITIVE PAR UN COPOLYMÈRE SÉQUENCÉ OLÉFINIQUE ET ARTICLES FABRIQUÉS À PARTIR DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2018 US 201862756371 P**

(43) Date of publication of application:
**15.09.2021 Bulletin 2021/37**

(73) Proprietor: **Dow Global Technologies LLC
Midland, MI 48674 (US)**

(72) Inventors:
• **LI, Jun
Freeport, Texas 77566 (US)**
• **GORIN, Craig F.
Midland, Michigan 48674 (US)**
• **GLAD, Brayden E.
Lake Jackson, Texas 77566 (US)**
• **HU, Yushan
Lake Jackson, Texas 77566 (US)**
• **LUGO, Elva L.
Lake Jackson, Texas 77566 (US)**
• **YAN, Ni
Lake Jackson, Texas 77566 (US)**
• **THAKRE, Piyush
Lake Jackson, Texas 77566 (US)**
• **HOOK, Bruce D.
Lake Jackson, Texas 77566 (US)**
• **WILMOT, Nathan
Lake Jackson, Texas 77566 (US)**

(74) Representative: **Jewell, Catherine Mary
Beck Greener LLP
Fulwood House
12 Fulwood Place
London WC1V 6HR (GB)**

(56) References cited:
**EP-A1- 3 018 152      CN-A- 106 977 809
JP-A- 2017 008 432      JP-A- 2017 197 627**

**Description**

Field of the Invention

The invention relates to a method of additive manufacturing in which thermoplastic polymer powders are melted and extruded, for example, using filaments that are advanced and heated through a nozzle and deposited on a platen (commonly referred to as fused filament fabrication. In particular, the invention relates to additive manufacturing of thermoplastic polymers comprised of an olefin block copolymer, wherein the olefin block copolymer is comprised of an isotactic polypropylene block and a polyethylene rich block.

Background of the Invention

Additive manufacturing of thermoplastic polymers (typically nylon) is well known. For example, fused filament fabrication (FFF), which is also commonly called plastic jet printing has been used to form 3D parts by using thermoplastic filaments that are drawn into a nozzle heated, melted and then extruded where the extruded filaments fuse together upon cooling (see, for example, U.S. Patent No. 5,121,329). Because the technique requires melting of a filament and extrusion, the materials have been limited to thermoplastic polymers (typically nylon) and complex apparatus. In addition, the technique has required support structures that are also extruded when making complex parts that must survive the elevated temperature needed to form the part, while also being easily removed, for example, by dissolving it or releasing it by dissolving a layer between it and the final article such as described by U.S. Patent No. 5,503,785.

The use of nylon or other polymers having polar groups has been necessitated to ensure adequate bonding between the layers deposited during formation of the 3D printed part (lack of adhesion in the z-direction). Likewise, polymers displaying crystalline formation in particular orientations such as high density polyethylene (HDPE) or polypropylene have also tended to warp and not adequately print. For these reasons the HDPE has not been successfully FFF 3D printed commercially. Blends of polymers having small amounts of HDPE have been reported to be printed such as described in WO2016080573. Likewise, high levels of filler solid fillers have been used to lessen the detrimental crystallization of HDPE (e.g., CN104629152A and CN105295175), but invariably the levels of filler necessary to allow for adequate printing substantially reduces the desirable mechanical properties of such parts formed with HDPE.

EP 3 018 152 describes a composition for 3D printer filaments and a filament for a 3D printer manufactured using the same. The composition includes a polymer base containing atactic polypropylene having a weight average molecular weight of 50,000 to 1,000,000, a density of 0.8 to 0.9 g/ml, and isotacticity (Pentad I.I, mmmm) of 5 to 20%. The melting index (210°C, 2.16 kg) of the polymer base is 0.5-30 g/10 minutes.

CN 106977809 discloses a low warping PP (propylene polymer) material for 3D printing and a preparation method thereof. The low warping PP material is prepared from the following components in parts by weight: 40 to 95 parts of PP, 0 to 10 parts of a flexibilizer, 5 to 60 parts of warping resistant filler, 0.1 to 10 parts of a warping resistant agent, 0.2 to 5 parts of a compatibilizer, 0.1 to 1 part of an antioxidant, 0.1 to 1 part of a lubricant, 0 to 0.5 part of an anti-ultraviolet agent and 0 to 1 part of toner. It is described that the shrinking percentage, weight-average molecular weight, molecular weight distribution and melt index of the PP are strictly controlled, so that the printing of the PP is realized; the printing stability of the PP is improved; and meanwhile, the warping during printing is controlled to some extent. The addition of the warping resistant filler having a relatively high degree of sphericity is described as not only reducing the shrinking percentage of the PP but also effectively eliminating the stress of a material; accordingly, the warping generated during printing is effectively prevented. It is described that the grain size of the warping resistant filler is controlled, so that not only is the filler dispersion facilitated, but also a nozzle of a 3D printer cannot be blocked, and in addition, that the warping resistant agent can thin the crystal form of the PP; crystal form thinning is conducive to lowering the internal stress of the PP, so that the warping of the PP during printing is ameliorated.

JP 2017197627 describes a polypropylene resin composition (Y) for thermofusion lamination molding comprising a polypropylene resin (X).

JP 2017008432 describes a polyolefin elastic monofilament, which is a monofilament obtained by melting spinning a propylene polymer composition containing (A) a specific propylene polymer of 5 to 25 pts.mass, (B) a specific propylene copolymer of 35 to 95 pts.mass and (C) at least one kind of polymer selected from specific isotactic polypropylene (C-1) and a specific isotactic propylene-ethylene copolymer (C-2) of 0 to 40 pts.mass, where total of (A), (B) and (C) is 100 pts.mass, and further drawing it.

The inherent benefits of using a polyolefin in a 3D printed part resemble the benefits obtained with other applications of these polymers. Polyolefins are by their nature non-toxic, wear-resistant, process at relatively low temperatures, and are fully hydrophobic. The latter two properties are especially relevant and valuable for FFF printing. Process temperature is preferably low because it not only uses less energy to print, but also burdens the nozzle and its cooling apparatus less. Smaller temperature gradients between the nozzle and its environment should allow for increased dimensional stability, which is of increasing value as users strive for smaller layer thicknesses to allow for more detail in finished parts. Hydrophobicity is inherently valuable because water absorption into the filament can be problematic. In 3D printing, polymer is transformed into the finished part at an extremely low rate compared to industrial mass-production processes, with a complex part requiring hours or even days to print. For an incumbent hydrophilic 3D printing polymer, the effects of humidity on either the part or the source spool can be meaningful. Source spools of poly (lactic acid) or nylon 3D printer filament are typically shipped in sealed packages with desiccant for this reason, but hydrophobic polyolefins do not require this extra packaging.

Resin for 3D printing filaments requires some mechanical strength and rigidity to prevent the filament from being damaged or crimped by the printer's feed apparatus prior to reaching the heated portion of the extruder. Such crimping is known as buckling and results in print failure. While extremely low-crystallinity polyolefins such as elastomers would be expected to be immune to warpage, such polymers are still unsuitable for 3D printing due to this issue.

It would be desirable to provide a method of printing a rigid polyolefin polymer while avoiding both of these prior art 3D printing polyethylene or polypropylene problems.

## Summary of the Invention

A first aspect of the invention is a method of additive manufacturing comprising,

(i) providing a thermoplastic material comprised of an olefin block copolymer, wherein the olefin block copolymer is comprised of an isotactic polypropylene block and a polyethylene rich block,

(ii) heating and dispensing said thermoplastic material through a nozzle to form an extrudate deposited on a base,

(iii) moving the base, nozzle or combination thereof while dispensing the thermoplastic material so that there is horizontal displacement between the base and nozzle in a predetermined pattern to form an initial layer of the material on the base, and

(iv) repeating steps (ii) and (iii) to form a successive layer of the material adhered on the initial layer to form an additive manufactured part.

A second aspect of the invention is an additive manufactured article comprised of at least two layers adhered together, at least one layer being comprised of a thermoplastic material comprise of an olefin block copolymer, wherein the olefin block copolymer is comprised of an isotactic polypropylene block and a polyethylene rich block. Desirably, a plurality of the layers are comprised of the olefin block copolymer or all of the layers are comprised of the olefin block copolymer. In an embodiment, the article may be comprised of layers comprised of the olefin block copolymer with support layers of another polymer that may be removed such as those known in the art including, for example, waxes and cellulosic based polymers.

Described herein as a third aspect of the disclosure, but not covered by the claimed invention, is a filament useful for additive manufacturing, comprising a filament that is comprised of an olefin block copolymer.

The improved additive manufacturing method may be used to form an additive manufactured polymeric part that has the desirable properties of polyolefins such as polypropylene or polyethylene while avoiding 3D printing problems associated with printing polyolefins such as warpage and lack of adhesion in the z direction (height). The method is particularly suited to make a thermoplastic part by the FFF method that is primarily or completely comprised of the olefin block copolymer without additives such as fillers that are solid at the melt temperature or 3D printing temperature used in FFF.

## Brief Description of the Drawings

Figure 1 is a side view of the additive manufactured article of this invention being made by the method of this invention.

Figure 2 is an end view of the extrudates of the initial layer being formed in the method of this invention.

Figure 3 is an end view of the finished initial layer of the method of this invention.

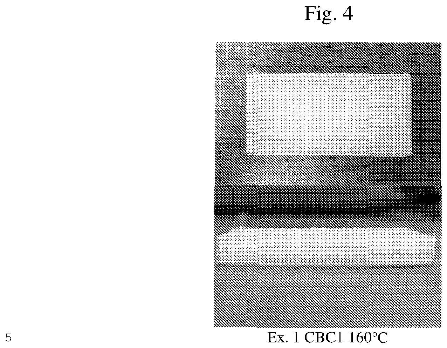

Figure 4 is a photograph of an example of additive manufactured article comprising the olefin block copolymer of this invention.

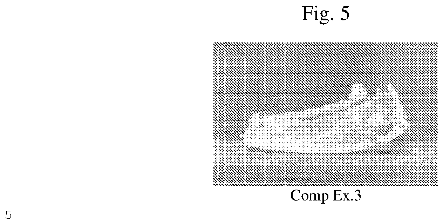

Figure 5 is a photograph of a comparative example of additive manufactured article comprising an olefin polymer not of this invention.

Detailed Description of the Invention

The additive manufacturing method may use any suitable apparatus and method of FFF additive manufactured part such as those known in the art (i.e., the method steps of heating, dispensing, repeating and removing) as described above utilizing a filament that has been made previously and then loaded into known FFF printing apparatus. The method may also melt the thermoplastic material at or prior to the nozzle and extrude an extrudate in a more conventional manner while forming the additive manufactured as follows.

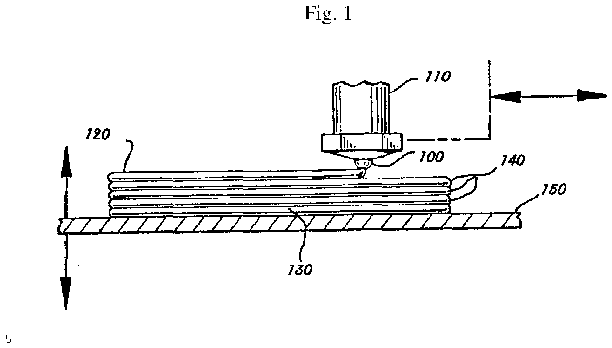

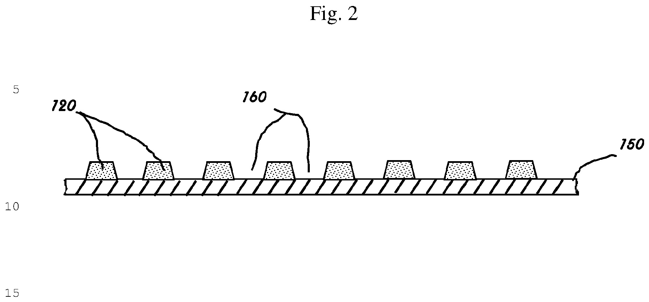

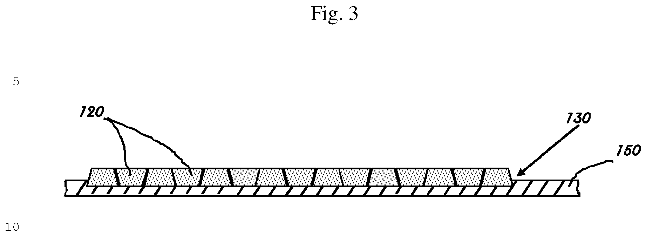

Turning to Figures 1-3, the method comprises heating and dispensing the thermoplastic material through nozzle 100 attached to the nozzle assembly 110. Upon dispensing the material forms an extrudate 120 that forms an initial layer 130 and successive layers 140 on base 150. Nozzle assembly 110 is depicted being orthogonal to base but may be set at any useful angle to form the extrudate whereby the extrudate 120 and nozzle assembly 110 form an obtuse angle with the extrudate 120 being parallel to the base. In addition, the nozzle assembly 110 may be rotated about its longitudinal axis, for example, to reorient the shape of the opening in the nozzle 100, to create extrudates 120 having differing relationship to the base 150 as shown in Figures 1-3.

The relative motion of the base 150 and nozzle assembly 110 are also shown, but it is understood that the base 150, nozzle assembly 110 or both may be moved to cause the relative motion in any horizontal direction or vertical direction. The motion is made in a predetermined manner, which may be accomplished by any known CAD/CAM methodology and apparatus such as those well known in the art and readily available robotics or computerized machine tool interface. Such pattern forming is described, for example, in U.S. Patent No. 5,121,329.

The extrudate 120 may be dispensed continuously or disrupted to form the initial layer 130 and successive layers 140. If disrupted extrudates 120 are desired, the nozzle may be comprised of a valve (not pictured) to shut off the flow of the material. Such valve mechanism may be any suitable such as any known electromechanical valves that can easily be controlled by any CAD/CAM methodology in conjunction with the pattern.

To improve adhesion, the base may have a coating or film of a compatible material such as polypropylene tape.

More than one nozzle assembly 110 may be employed to make composite or gradient structures within the additive manufactured part. Likewise, a second nozzle assembly 110 may be employed to dispense a support structure that may be later removed to allow more complex geometries to be formed such as described in U.S. Patent No. 5,503,785. The support material may be any that adds support and be removed easily such as those known in the art, for example, waxes.

The method employs a thermoplastic material comprised of an olefin block copolymer, wherein the olefin block copolymer is comprised of an isotactic polypropylene block and a polyethylene rich block. In the broadest sense these polymers are made using separate catalysts and shuttling agents to form block copolymers of 2 differing olefin monomers, monomer mixtures or combination thereof. The olefin block copolymer that is formed may have some other polymers in the polymer product made such as some fraction of homopolymers of the monomers or mixture of monomers used to make the olefin block copolymer. These methods are known and described, for example, in U.S. Pat. Nos. 8,822,598; 8,686,087; 9,511,567; 8,822,598 and 9,243,090.

The olefin block copolymer is comprised of two or more olefin comonomers: the olefin block copolymer is comprised of an isotactic polypropylene block and a polyethylene rich block. Preferably, the olefin block copolymer comprises in polymerized form propylene and ethylene and one or more C4-20 $\alpha$-olefin comonomers.

Illustrative embodiments of the olefin block copolymer include the block copolymer in the following composites referred to as a block composite (BC) and a crystalline block composite (CBC) herein.

In one embodiment, the "block composite" ("BC") comprises:

(i) an ethylene based polymer (EP) having an ethylene content of from 10 mol% to less than 90 mol% (a soft copolymer);
(ii) an alpha-olefin based polymer (AOP) having an alpha-olefin content of greater than 90 mol% (a hard copolymer); and
(iii) a block copolymer having an ethylene block (EB) and an alpha-olefin block (AOB);

wherein the ethylene block (soft block/soft segment) of the block copolymer is the same composition as the ethylene based polymer of component (i) of the block composite and the alpha-olefin block (hard block/hard segment) of the block copolymer is the same composition as the alpha-olefin based polymer of component (ii) of the block composite. The term "same composition" refers to two components that have identical monomer and comonomer contents, identical structures, and identical physical properties. The compositional split between the amount of ethylene based polymer and alpha-olefin based polymer will be the same, or essentially the same, as that between the corresponding blocks in the block copolymer. Nonlimiting examples of suitable $\alpha$-olefins include, for example, $C_3$-$C_{10}$ $\alpha$-olefins such as $C_3$, $C_4$, $C_5$, $C_6$ and $C_8$ $\alpha$-olefins. In certain embodiments, the $\alpha$-olefin is propylene. In further embodiments, the AOB and EB may be an iPP-EP diblock copolymer.

"Hard" blocks (also referred to as hard segments) refer to highly crystalline blocks of polymerized units in which a monomer (e.g., propylene) is present in an amount greater than or equal to 90 mol%. In other words, the comonomer content (e.g., ethylene content) in the hard blocks/segments is less than or equal to 10 mol%. In some embodiments, the hard segments comprise all or substantially all propylene units (such as an iPP - isotactic polypropylenecopolymer or homopolymer block). "Soft" blocks (also referred to as soft segments), on the other hand, refer to amorphous, substantially amorphous, or elastomeric blocks of polymerized units in which a monomer (e.g., ethylene) is present in an amount from 10 mol% to less than 90 mol%. In other words, the comonomer content (e.g., propylene content) in the soft blocks/segments is greater than 10 mol%.

In an embodiment, the BC has a total ethylene content that is from 25 wt%, or 30 wt% to 50 wt%, or 55 wt%, or 60 wt%, or 70 wt%, based on the total weight of the BC. The remainder of the total weight of the BC may be accounted for by units derived from at least one $C_3$-$C_{10}$ $\alpha$-olefin, such as propylene. In an embodiment, the BC is a propylene-based polymer containing greater than, or equal to, 50 wt% units derived from propylene, based on the total weight of the BC.

In an embodiment, the BC includes (i) a soft copolymer having an ethylene content that is from 10 mol% to less than 90 mol%, (ii) a hard copolymer having a propylene content that is greater than or equal to 90 mol%, and (iii) a block copolymer (e.g., a diblock) having a soft block (i.e., soft segment) and a hard block (i.e., hard segment), wherein the hard block of the block copolymer is the same composition as the hard copolymer of the block composite and the soft block of the block copolymer is the same composition as the soft copolymer of the block composite. The compositional split between the amount of soft copolymer and hard copolymer will be the same, or essentially the same, as that between the corresponding blocks in the block copolymer.

In an embodiment, the BC includes (i) a soft copolymer having an ethylene content that is greater than 10 wt% and less than 86 wt%, (ii) a hard copolymer having a propylene content that is greater than 80 wt% and up to 100 wt%, and (iii) a block copolymer (e.g., a diblock) having a soft block (i.e., soft segment) and a hard block (i.e., hard segment), wherein the hard block of the block copolymer is the same composition as the hard copolymer of the BC and the soft block of the block copolymer is the same composition as the soft copolymer of the BC. The compositional split between the amount of soft copolymer and hard copolymer will be the same, or essentially the same, as that between the corresponding blocks in the block copolymer.

In the BC, the hard blocks refer to highly crystalline blocks of polymerized $\alpha$-olefin units (e.g., propylene). In the hard blocks, the monomer (i.e., propylene) may be present in an amount greater than 80 wt% (e.g., greater than 85 wt%, greater than 90 wt%, and/or greater than 95 wt%), based on the weight of the hard block. The remainder of the hard block may be the comonomer (e.g., ethylene) in an amount of less than 20 wt% (e.g., less than 15 wt% and/or less than 10 wt%), based on the weight of the hard block. In an embodiment, the hard blocks comprise all or substantially all propylene units, such as an iPP (isotactic) homopolymer block or an iPP copolymer block with less than 10 wt% of ethylene. The "soft blocks" refer to amorphous, substantially amorphous, or elastomer blocks of polymerized ethylene units. In the soft blocks, the monomer (i.e., ethylene) may be present in an amount of greater than 20 wt% and less than 90 wt% (e.g., from 40 wt% to 89 wt%, from 45 wt% to 85 wt%, and/or from 50 wt% to 80 wt%), based on the weight of the soft block. The remainder of the soft block may be the comonomer (e.g., propylene).

In an embodiment, the block composite includes a block copolymer having 30-70 wt% hard block and 30-70 wt% soft block. In other words, the block composite includes a block copolymer having 30-70 wt% hard block and 30-70 wt% soft block, based on the total weight of the block copolymer.

In an embodiment, the block copolymer of the BC has the formula (EP)-(iPP), in which EP represents the soft block of polymerized ethylene and propylene monomeric units (e.g., 50-80 wt% of ethylene and remainder propylene) and iPP represents a hard block of isotactic propylene homopolymer or isotactic propylene copolymer (e.g., less than 10 wt% of ethylene and remainder propylene).

An exemplary measurement of the relative amount of the block copolymer is referred to as the Block Composite Index (BCI), as further discussed below. The BCI for the BC is greater than 0 and less than 1.0. In an embodiment, the BC has a Block Composite Index (BCI) from greater than zero, or 0.1, or 0.2, or 0.3 to 0.4, or 0.5, or 0.6, or 0.7, or 0.8, or 0.9, or 1.0. In another embodiment, the BC has a BCI from greater than zero to 0.4, or from 0.1 to 0.3, or 0.4. In another embodiment, the BC has a BCI from greater than 0.4 to 1.0, or from 0.4, or 0.5, or 0.6 to 0.7, or 0.9, or 1.0. In another embodiment, the BC has a BCI from 0.7, or 0.8, or 0.9 to 1.0.

In an embodiment, the BC has a weight average molecular weight (Mw) from 10,000 g/mol, or 35,000 g/mol, or 50,000 g/mol, or 80,000 g/mol to 200,000 g/mol, or 300,000 g/mol, or 500,000 g/mol, or 1,000,000 g/mol, or 2,500,000 g/mol. In an embodiment, the molecular weight distribution (Mw/Mn) or polydispersity of the BC is less than 5, or from 1, or 1.5 to 4, or 5.

In an embodiment, the melt flow rate (MFR) of the BC is from 0.1 g/10 min, or 3 g/10 min to 10 g/10 min, or 15 g/10 min, or 20 g/10 min, or 60 g/10 min, or 100 g/10 min, or 1,000 g/10 min.

In an embodiment, the density of the BC is from 0.850 g/cc, or 0.860 g/cc, or 0.865 g/cc to 0.890 g/cc, or 0.895 g/cc, or 0.900 g/cc, or 0.910 g/cc, or 0.920 g/cc.

In an embodiment, the BC exhibits two melting peaks, a first melting peak ($Tm1^{BC}$) and a second melting peak ($Tm2^{BC}$). In an embodiment, the BC has a second melting peak ($Tm2^{BC}$) that is greater than 35°C, or greater than 90°C, or greater than 100°C, or from 40°C, or 100°C to 150°C.

In an embodiment, the difference between $Tm1^{BC}$ and $Tm2^{BC}$ is greater than, or equal to, 40°C. In another embodiment, the difference between $Tm1^{BC}$ and $Tm2^{BC}$ is greater than 40°C, or greater than 50°C, or greater than 60°C.

In an embodiment, the BC contains: (i) from 0.5 wt%, or 10 wt%, or 20 wt%, or 30 wt% to 40 wt%, or 50 wt%, or 60 wt%, or 70 wt%, or 79 wt%, or 95 wt% EP; (ii) from 0.5 wt%, or 10 wt%, or 20 wt%, or 30 wt% to 40 wt%, or 50 wt%, or 60 wt%, or 70 wt%, or 79 wt%, or 95 wt% AOP; and (iii) from 5 wt%, or 50 wt% to 99 wt % block copolymer, based on total weight of the BC.

The sum of the weight percents of EP, AOP and block copolymer equals 100%.

In an embodiment, the block copolymer of the BC contains from 5 wt%, or 10 wt%, or 25 wt%, or 30 wt% to 70 wt%, or 75 wt%, or 90 wt%, or 95 wt% ethylene blocks (EB); and from 95 wt%, or 90 wt%, or 75 wt%, or 70 wt% to 30 wt%, or 25 wt%, or 10 wt%, or 5 wt% alpha-olefin blocks (AOB).

In an embodiment, the BC contains, consists essentially of, or consists of

(i) from 0.5 wt%, or 10 wt%, or 20 wt%, or 30 wt% to 40 wt%, or 50 wt%, or 60 wt%, or 70 wt%, or 79 wt%, or 95 wt% EP;

(ii) from 0.5 wt%, or 10 wt%, or 20 wt%, or 30 wt% to 40 wt%, or 50 wt%, or 60 wt%, or 70 wt%, or 79 wt%, or 95 wt% iPP; and

(iii) from 5 wt%, or 10 wt%, or 25 wt%, or 30 wt%, or 50 wt% to 70 wt%, or 80 wt%, or 90 wt%, or 95 wt%, or 99 wt % block copolymer, based on total weight of the BC; and

the block composite has one, some, or all of the following properties:

(a) the EP contains from 50 wt%, or 55 wt%, or 60 wt% to 65 wt%, or 70 wt%, or 75 wt%, or 80 wt% ethylene and a reciprocal amount of propylene, or from 20 wt%, or 25 wt%, or 30 wt%, or 35 wt% to 40 wt%, or 45 wt%, or 50 wt% propylene, based on the total weight of the EP; and/or

(b) the EP contains from 10 mol%, or 20 mol%, or 30 mol%, or 40 mol%, or 50 mol%, or 60 mol%, or 65 mol%, or 70 mol%, or 73 mol% to 75 mol%, or 80 mol%, or 85 mol%, or 89 mol% polymerized ethylene units and a reciprocal amount of polymerized propylene units, or from 11 mol%, or 15 mol%, or 20 mol%, or 25 mol% to 27 mol%, or 30 mol%, or 35 mol%, or 40 mol%, or 50 mol%, or 60 mol%, or 70 mol%, or 80 mol%, or 90 mol% polymerized propylene units, based on the total number of moles of the EP; and/or

(c) the iPP contains from 100 wt%, or 99.5 wt%, or 99 wt% to 95 wt%, or 90 wt%, or 85 wt%, or 80 wt%, or 75 wt%, or 70 wt%, or 65 wt%, or 60 wt%, or 55 wt% propylene and a reciprocal amount of ethylene, or from 0 wt%, or 0.5 wt% to 1 wt%, or 5 wt%, or 10 wt%, or 15 wt%, or 20 wt%, or 25 wt%, or 30 wt%, or 35 wt%, or 40 wt%, or 45 wt% ethylene, based on the total weight of the iPP; and/or

(d) the iPP contains from 90 mol%, or 91 mol%, or 92 mol%, or 93 mol%, or 94 mol%, or 95 mol%, or 96 mol%, or 97 mol%, or 98 mol% to 99 mol% polymerized propylene units and a reciprocal amount of polymerized ethylene units, or from 1 mol% to 2 mol%, or 3 mol%, or 4 mol%, or 5 mol%, or 6 mol%, or 7 mol%, or 8 mol%, or 9 mol%, or 10 mol% polymerized ethylene units, based on the total number of moles of the iPP; and/or

(e) the block copolymer contains from 5 wt%, or 10 wt%, or 25 wt%, or 30 wt% to 70 wt%, or 75 wt%, or 90 wt%, or 95 wt% EB and a reciprocal amount, or from 95 wt%, or 90 wt%, or 75 wt%, or 70 wt% to 30 wt%, or 25 wt%, or 10 wt%, or 5 wt% iPP blocks, based on the total weight of the block copolymer; and/or

(f) a BCI from 0.1, or 0.2, or 0.3, or 0.4 to 0.5, or 0.6, or 0.7, or 0.8, or 0.9, or 1.0; and/or

(g) a melt flow rate (MFR) from 0.1 g/10 min, or 5 g/10 min, or 10 g/10 min, or 15 g/10 min, or 18 g/10 min to 20 g/10 min, or 30 g/10 min, or 50 g/10 min, or 1,000 g/10 min; and/or

(h) a weight average molecular weight (Mw) from 50,000 g/mol, or 80,000 g/mol, or 100,000 g/mol to 150,000 g/mol, or 200,000 g/mol, or 300,000 g/mol, or 500,000 g/mol, or 1,000,000 g/mol; and/or

(i) a Mw/Mn from 1.0, or 1.5, or 2.0, or 2.5, or 3.0, or 3.5, or 3.7 to 3.8, or 4.0, or 4.5, or 5.0; and/or

(h) a heat of fusion (or melt enthalpy) from 20 Joules per gram (J/g), or 25 J/g, or 30 J/g, or 35 J/g, or 50 J/g, or 60 J/g, or 70 J/g, or 75 J/g, or 80 J/g to 85 J/g, or 90 J/g, or 95 J/g, or 100 J/g, or 125 J/g; and/or

(j) a crystallization temperature, Tc, from 70°C, or 75 °C, or 80°C, or 85°C to 90°C, or 95°C, or 100°C; and/or

(k) a first peak $Tm1^{BC}$ from 100°C, or 110°C, or 120°C, or 130°C, or 135°C to 138°C, or 140°C, or 145°C, or 150°C; and/or

(l) a second peak $Tm2^{BC}$ from 35°C, or 40°C to 45°C, or 50°C, or 60°C; and/or

(m) a difference between $Tm1^{BC}$ and $Tm2^{BC}$ that is greater than 40°C, or greater than 50°C, or greater than 60°C;

and/or

(n) a total ethylene content from 20 wt%, or 25 wt%, or 30 wt%, or 33 wt% to 35 wt%, or 40 wt%, or 45 wt%, or 50 wt%, based on the total weight of the BC.

In a further embodiment, the BC has all of the above properties (a)-(n).

In an embodiment, the BC contains, consists essentially of, or consists of

(i) an ethylene-based polymer having an ethylene content of from 10 mol% to less than 90 mol%;
(ii) a propylene-based polymer having a propylene content of greater than 90 mol%; and
(iii) a block copolymer comprising an ethylene block and a propylene block;

wherein the ethylene block of the (iii) block copolymer is the same composition as the (i) ethylene-based polymer; and the propylene block of the (iii) block copolymer is the same composition as the (ii) propylene-based polymer; and the BC has one, some, or all, of the following properties:

(a) a melt flow rate (MFR) from 0.1 g/10 min, or 5 g/10 min, or 10 g/10 min, or 15 g/10 min, or 18 g/10 min to 20 g/10 min, or 30 g/10 min, or 50 g/10 min, or 1,000 g/10 min; and/or
(b) exhibits two melting peaks; and/or
(c) a first peak $Tm1^{BC}$ from 100°C, or 110°C, or 120°C, or 130°C, or 135°C to 138°C, or 140°C, or 145°C, or 150°C; and/or
(d) a second peak $Tm2^{BC}$ from 35°C, or 40°C to 45°C, or 50°C, or 60°C; and/or
(e) a difference between $Tm1^{BC}$ and $Tm2^{BC}$ that is greater than 40°C, or greater than 50°C, or greater than 60°C.

In a further embodiment, the BC has all of the above properties (a)-(e).

The block composite, may comprise two or more embodiments discussed herein.

*(B) Crystalline Block Composite (CBC)*

The term "crystalline block composite" ("CBC") refers to polymers containing three polymer components:

(i) a crystalline ethylene based polymer (CEP) having an ethylene content of greater than, or equal to, 90 mol% (also referred to herein as a soft polymer of CBC), based on the total moles of polymerized monomer units in the crystalline ethylene-based polymer (CEP);
(ii) a crystalline alpha-olefin based polymer (CAOP) having an alpha-olefin content of greater than 90 mol% (also referred to herein as a hard polymer of the CBC), based on the total moles of polymerized monomer units in the crystalline alpha-olefin-based polymer (CAOP); and
(iii) a block copolymer comprising a crystalline ethylene block (CEB) and a crystalline alpha-olefin block (CAOB); and

wherein the crystalline ethylene block has the same or similar Tm as the crystalline ethylene-based polymer (CEP) of component (i), and
wherein the crystalline alpha-olefin block has the same or similar Tm as the crystalline alpha-olefin-based polymer (CAOP) of component (ii); and
wherein the phrase "same or similar" refers to an absolute Tm differential of $\leq$ 5°C, further $\leq$ 4°C, further $\leq$ 3°C, further $\leq$ 2°C.

The present foam bead may include (B) a crystalline block composite.

In one embodiment, the "crystalline block composite" ("CBC") comprises:

(i) a crystalline ethylene based polymer (CEP) having an ethylene content of greater than, or equal to, 90 mol% (also referred to herein as a soft polymer);
(ii) a crystalline alpha-olefin based polymer (CAOP) having an alpha-olefin content of greater than 90 mol% (also referred to herein as a hard polymer); and
(iii) a block copolymer comprising a crystalline ethylene block (CEB) and a crystalline alpha-olefin block (CAOB);

wherein the crystalline ethylene block (CEB) (soft block/soft segment) of the block copolymer is the same composition as the crystalline ethylene based polymer (CEP) of component (i) of the block composite and the crystalline alpha-olefin block (CAOB) (hard block/hard segment) of the block copolymer is the same composition as the crystalline alpha-olefin based polymer (CAOP) of component (ii) of the block composite. The compositional split between the amount of CEP and CAOP will be the same, or essentially the same, as that between the corresponding blocks in the block copolymer. When produced in a continuous process, the CBC has a polydispersity index (PDI) from 1.7, or 1.8 to 3.5, or 5, or 10, or 15. Such CBC is described in, for example, US Patent Application Publication Nos. 2011/0313106, 2011/0313108 and 2011/0313108, all published on 22 December 2011, and in PCT Publication No. WO2014/043522A1, published 20 March 2014, each of which are relevant with respect to descriptions of CBC, processes to make CBC, and methods of analyzing CBC. Nonlimiting examples of suitable $\alpha$-olefins include, for example, $C_3$-$C_{10}$ $\alpha$-olefins such as $C_3$, $C_4$, $C_5$, $C_6$ and $C_8$ $\alpha$-olefins. In certain embodiments, the $\alpha$-olefin is propylene.

The "crystalline ethylene based polymer" ("CEP") contains least 90 mol% polymerized ethylene units in which any comonomer content is 10 mol% or less, or from 0 mol% to 5 mol%, or 7 mol%, or 10 mol%. The crystalline ethylene based polymer has corresponding melting points that are 75°C and above, or 90°C and above, or 100°C and above.

The "crystalline alpha-olefin based polymer" ("CAOP") is a highly crystalline polymer containing polymerized $\alpha$-olefin units in which the monomer (e.g., propylene) is present in an amount greater than 90 mol%, or greater than 93 mol%, or greater than 95 mol%, or greater than 98 mol%, based on the total weight of the crystalline $\alpha$-olefin based polymer (propylene). In an embodiment, the polymerized $\alpha$-olefin unit is polypropylene. The comonomer (e.g., ethylene) content in the CAOP is less than 10 mol%, or less than 7 mol%, or less than 5 mol%, or less than 2 mol%. CAOPs with propylene crystallinity have corresponding melting points that are 80°C and above, or 100°C and above, or 115°C and above, or 120°C and above. In an embodiment, the CAOP comprises all, or substantially all, propylene units.

Nonlimiting examples of other suitable $\alpha$-olefin units (in addition to propylene) that may be used in the CAOP are those that contain 4 to 10 carbon atoms, such as 1-butene, 1-hexene, 4-methyl-1-pentene and 1-octene. Nonlimiting examples of suitable diolefins include isoprene, butadiene, 1,4-pentadiene, 1,4-hexadiene, 1,5-hexadiene, 1,7-octadiene, 1, 9-decadiene, dicyclopentadiene, methylene-norbomene, 5-ethylidene-2-norbornene, or the like, and combinations containing at least one of the foregoing $\alpha$-olefin units.

The block copolymer of the CBC contains crystalline ethylene block (CEB) and a crystalline alpha olefin block (CAOB). In the crystalline ethylene block (CEB), ethylene monomer is present in an amount greater than 90 mol%, or greater than 93 mol%, or greater than 95 mol%, or greater than 90 mol%, based on the total number of moles of the CEB. In an embodiment, the crystalline ethylene block (CEB) polymer is polyethylene. The polyethylene is present in an amount greater than 90 mol%, or greater than 93 mol%, or greater than 95 mol%, based on the total number of moles of the CEB. If any comonomer is present in the CEB, it is present in an amount of less than 10 mol%, or less than 5 mol%, based on the total number of moles of the CEB.

The CAOB includes a polypropylene block that is copolymerized with other $\alpha$-olefin units that contain 4 to 10 carbon atoms. Nonlimiting examples of suitable $\alpha$-olefins are provided above. The polypropylene is present in the CAOB in an amount of greater than or equal to 90 mol%, or greater than 93 mol%, or greater than 95 mol%, based on the total number of moles of the CAOB. The comonomer content in the CAOB is less than 10 mol%, or less than 7 mol%, or less than 5 mol percent, based on the total number of moles in the CAOB. A CAOB with propylene crystallinity has a corresponding melting point that is 80°C and above, or 100°C and above, or 115°C and above, or 120°C and above. In an embodiment, the CAOB comprises all, or substantially all, propylene units.

In an embodiment, the CBC contains propylene, 1-butene or 4-methyl-1-pentene and one or more comonomers. In a further embodiment, the CBC contains, in polymerized form, propylene and ethylene and/or one or more $C_{4-20}$ $\alpha$-olefin comonomers, and/or one or more additional copolymerizable comonomers, or the CBC contains 4-methyl-1-pentene and ethylene and/or one or more $C_{4-20}$ $\alpha$-olefin comonomers, or the CBC contains 1-butene and ethylene, propylene and/or one or more $C_5$-$C_{20}$ $\alpha$-olefin comonomers and/or one or more additional copolymerizable comonomers. Additional suitable comonomers are selected from diolefins, cyclic olefins, and cyclic diolefins, halogenated vinyl compounds, and vinylidene aromatic compounds. In an embodiment, the monomer is propylene and the comonomer is ethylene.

In an embodiment, the CBC is a propylene-based polymer containing greater than, or equal to, 50 wt% units derived from propylene, based on the total weight of the CBC.

Comonomer content in the CBC may be measured using any suitable technique, such as techniques based on nuclear magnetic resonance (NMR) spectroscopy.

In an embodiment, the CBC exhibits two melting peaks, a first melting peak (Tm1$^{CBC}$) and a second melting peak (Tm2$^{CBC}$). In an embodiment, the CBC has a second melting peak (Tm2$^{CBC}$) that is greater than 100°C, or greater than 120°C, or greater than 125°C. In an embodiment, the CBC has a second melting peak (Tm2$^{CBC}$) from 100°C, or 120°C, or 125°C to 220°C, or 250°C.

In an embodiment, the difference between Tm1$^{CBC}$ and Tm2$^{CBC}$ is greater than, or equal to, 40°C. In another embodiment, the difference between Tm1$^{CBC}$ and Tm2$^{CBC}$ is greater than 40°C, or greater than 50°C, or greater than 60°C.

In an embodiment, the CBC has a melt flow rate (MFR) from 0.1 g/10 min to 30 g/10 min, or 50 g/10 min, or 1,000 g/10 min.

In an embodiment, the CBC has a weight average molecular weight (Mw) from 10,000 g/mol, or 35,000 g/mol, or 50,000 g/mol to 200,000 g/mol, or 300,000 g/mol, or 1,000,000 g/mol, or 2,500,000 g/mol.

In an embodiment, the CBC has a Crystalline Block Composite Index (CBCI) from greater than zero, or 0.1, or 0.2, or 0.3 to 0.4, or 0.5, or 0.6, or 0.7, or 0.8, or 0.9, or 1.0. In another embodiment, the BC has a BCI from greater than zero to 0.4, or from 0.1 to 0.3, or 0.4. In another embodiment, the CBC has a CBCI from greater than 0.4 to 1.0, or from 0.4, or 0.5, or 0.6 to 0.7, or 0.9, or 1.0. In another embodiment, the CBC has a CBCI from 0.7, or 0.8, or 0.9 to 1.0.

In an embodiment, the CBC contains (i) from 0.5 wt% to 79 wt%, or 95 wt % CEP; (ii) from 0.5 wt% to 79 wt%, or 95 wt % CAOP; and (iii) from 5 wt%, or 50 wt% to 99 wt % block copolymer, based on total weight of crystalline block composite.

The sum of the weight percents of CEP, CAOP and block copolymer equals 100%.

In an embodiment, the block copolymer of the CBC contains from 5 wt%, or 10 wt%, or 25 wt%, or 30 wt% to 70 wt%, or 75 wt%, or 90 wt%, or 95 wt% crystalline ethylene blocks (CEB); and from 95 wt%, or 90 wt%, or 75 wt%, or 70 wt% to 30 wt%, or 25 wt%, or 10 wt%, or 5 wt% crystalline alpha-olefin blocks (CAOB).

In an embodiment, the CBC contains (i) a CEP that is a crystalline ethylene/propylene copolymer (CEP); (ii) a CAOP that is an isotactic crystalline propylene homopolymer (iPP); and (iii) a block copolymer containing an iPP block (CAOB) and an EP block (CEB); wherein the block copolymer includes a diblock with the Formula (2): (CEP)-(iPP) Formula (2).

In an embodiment, the CBC contains, consists essentially of, or consists of:

(i) from 0.5 wt%, or 10 wt%, or 20 wt%, or 30 wt% to 40 wt%, or 50 wt%, or 60 wt%, or 70 wt%, or 79 wt%, or 95 wt% CEP;
(ii) from 0.5 wt%, or 10 wt%, or 20 wt%, or 30 wt% to 40 wt%, or 50 wt%, or 60 wt%, or 70 wt%, or 79 wt%, or 95 wt% iPP; and
(iii) from 5 wt%, or 10 wt%, or 25 wt%, or 30 wt% or 50 wt% to 70 wt%, or 80 wt%, or 90 wt%, or 95 wt%, or 99 wt % block copolymer, based on total weight of the CBC; and

the crystalline block composite has one, some, or all of the following properties:

(a) the CEP contains from 85 wt%, or 89 wt% to 92 wt%, or 95 wt%, or 99 wt% ethylene and a reciprocal amount of propylene, or from 1 wt%, or 5 wt%, or 8 wt% to 11 wt%, or 15 wt% propylene, based on the total weight of the CEP; and/or

(b) the CEP contains from 90 mol%, or 91 mol%, or 92 mol% to 95 mol%, or 96 mol%, or 97 mol%, or 98 mol%, or 99 mol% polymerized ethylene units and a reciprocal amount of polymerized propylene units, or from 1 mol%, or 2 mol%, or 3 mol%, or 4 mol%, or 5 mol% to 8 mol%, or 9 mol%, or 10 mol% polymerized propylene units, based on the total number of moles of the CEP; and/or

(c) the iPP contains from 100 wt%, or 99.5 wt%, or 99 wt% to 95 wt%, or 90 wt%, or 85 wt%, or 80 wt%, or 75 wt%, or 70 wt%, or 65 wt%, or 60 wt%, or 55 wt% propylene and a reciprocal amount of ethylene, or from 0 wt%, or 0.5 wt% to 1 wt%, or 5 wt%, or 10 wt%, or 15 wt%, or 20 wt%, or 25 wt%, or 30 wt%, or 35 wt%, or 40 wt%, or 45 wt% ethylene, based on the total weight of the iPP; and/or

(d) the iPP contains from 90 mol%, or 91 mol%, or 92 mol%, or 93 mol%, or 94 mol%, or 95 mol%, or 96 mol%, or 97 mol%, or 98 mol% to 99 mol% polymerized propylene units and a reciprocal amount of polymerized ethylene units, or from 1 mol% to 2 mol%, or 3 mol%, or 4 mol%, or 5 mol%, or 6 mol%, or 7 mol%, or 8 mol%, or 9 mol%, or 10 mol% polymerized ethylene units, based on the total number of moles of the iPP; and/or

(e) the block copolymer contains from 5 wt%, or 10 wt%, or 25 wt%, or 30 wt% to 50 wt%, or 70 wt%, or 75 wt%, or 90 wt%, or 95 wt% EB and a reciprocal amount, or from 95 wt%, or 90 wt%, or 75 wt%, or 70 wt%, or 50 wt% to 30 wt%, or 25 wt%, or 10 wt%, or 5 wt% iPP blocks, based on the total weight of the block copolymer; and/or

(f) a CBCI from 0.1, or 0.2, or 0.3, or 0.4, or 0.5, or 0.6 to 0.7, or 0.8, or 0.9, or 1.0; and/or

(g) a melt flow rate (MFR) from 0.1 g/10 min, or 5 g/10 min, or 10 g/10 min, or 15 g/10 min, or 20 g/10 min, or 23 g/10 min to 40 g/10 min, or 50 g/10 min, or 1,000 g/10 min; and/or

(h) a weight average molecular weight (Mw) from 50,000 g/mol, or 70,000 g/mol, or 80,000 g/mol, or 100,000 g/mol to 130,000 g/mol, or 150,000 g/mol, or 200,000 g/mol, or 300,000 g/mol, or 500,000 g/mol, or 1,000,000 g/mol; and/or

(i) a Mw/Mn from 1.0, or 1.5, or 2.0, or 2.5, or 3.0, or 3.5, or 3.7, or 3.8, or 4.0 to 4.3, or 4.5, or 5.0; and/or

(j) a heat of fusion (or melt enthalpy) from 20 J/g, or 25 J/g, or 30 J/g, or 35 J/g, or 50 J/g, or 60 J/g, or 70 J/g, or 75 J/g, or 80 J/g, or 85 J/g, or 90 J/g, or 92 J/g to 100 J/g, or 110 J/g, or 115 J/g, or 125 J/g; and/or

(k) a crystallization temperature, Tc, from 70°C, or 75 °C, or 80°C, or 85°C, or 90°C to 95°C, or 100°C; and/or

(l) a first peak $Tm1^{CBC}$ from 100°C, or 110°C, or 120°C, or 130°C to 136°C, or 140°C, or 145°C, or 150°C; and/or

(m) a second peak $Tm2^{CBC}$ from 90°C, or 95°C, or 100°C, or 103°C to 105°C, or 110°C, or 115°C, or 120°C, or 125°C, or 130°C, or 140°C, or 150°C; and/or

(n) a difference between $Tm1^{CBC}$ and $Tm2^{CBC}$ that is greater than 40°C, or greater than 50°C, or greater than 60°C; and/or

(o) a total ethylene content from 20 wt%, or 25 wt%, or 28 wt% to 47 wt%, or 50 wt%, or 55 wt%, or 60 wt%, or 70 wt%, based on the total weight of the CBC.

In a further embodiment, the CBC has all of the above properties (a)-(o).

In an embodiment, the crystalline block composite contains, consists essentially of, or consists of

(i) a crystalline ethylene-based polymer having an ethylene content of greater than 90 mol%;
(ii) a crystalline propylene-based polymer having a propylene content of greater than 90 mol%; and
(iii) a block copolymer comprising a crystalline ethylene block and a crystalline propylene block;

wherein the crystalline ethylene block of the (iii) block copolymer is the same composition as the (i) crystalline ethylene-based polymer; and the crystalline propylene block of the (iii) block copolymer is the same composition as the (ii) crystalline propylene-based polymer; and
the CBC has one, some, or all, of the following properties:

(a) a melt flow rate (MFR) from 0.1 g/10 min, or 5 g/10 min, or 10 g/10 min, or 15 g/10 min, or 18 g/10 min to 20 g/10 min, or 30 g/10 min, or 50 g/10 min, or 1,000 g/10 min; and/or
(b) exhibits two melting peaks; and/or
(c) a first peak $Tm1^{CBC}$ from 100°C, or 110°C, or 120°C, or 130°C to 136°C, or 140°C, or 145°C, or 150°C; and/or
(d) a second peak $Tm2^{CBC}$ from 90°C, or 95°C, or 100°C, or 103°C to 105°C, or 110°C, or 115°C, or 120°C, or 125°C, or 130°C, or 140°C, or 150°C; and/or (e) a difference between $Tm1^{CBC}$ and $Tm2^{CBC}$ that is greater than 40°C, or greater than 50°C, or greater than 60°C.

In a further embodiment, the CBC has all of the above properties (a)-(e).

The crystalline block composite may comprise two or more embodiments discussed herein.

It is understood that the sum of the components in each of the polymers disclosed herein, including the foregoing BC and CBC polymers, yields 100 mol%.

A preferred BC is one comprised of polymerized propylene. Desirably the PP block copolymer is one comprised of isotactic polypropylene (iPP) based block and an EP copolymer based block. The block segment composition may range from about 10 to 90 weight percent or preferably 30-70 weight % of EP block and corresponding 90 to 10 weight percent or preferably 70 to 30 weight percent of iPP block, with the EP block having at least about 60%, 80% to about 90% by wt. % ethylene on an overall average and the balance being propylene Ethylene and propylene being referred to within the block is naturally understood to mean the residue of these after being incorporated into the polymer. Such PP block copolymers are available from The Dow Chemical Company (Midland, MI) under the trademark INTUNE™.

The thermoplastic material may be further comprised of other polymers that are compatible with the olefin block copolymer. When other polymers are used with the olefin block copolymer, the amount of olefin block copolymer is an amount that enables the improved printing desired, but typically is at least 10%, 50%, or 90%. Other polymers may include HDPE such as those commercially available. HDPE has the common understanding within the art, wherein HDPE is characterized by the catalysts used to make them such as Philips Chromium catalyst, Ziegler catalysts or metallocene catalysts. HDPE has marginally higher density and is more crystalline than low density polyethylenes with little or essentially no branching resulting in a more crystalline polymer than LDPE. HDPE is characterized by a higher strength to weight ratio compared to LDPE. Typically, HDPE will have a density of about 9.4 to 9.65 and a melt index from about 0.1 to about 50 and preferably from about 0.25 to 40 (ASTM D1238). Exemplary commercially available HDPEs include, but not limited to, DMDA-8007 NT 7 (Melt Index 8.3, Density 0.965), DMDC-8910 NT 7 (Melt Index 10, Density 0.943), DMDA-1210 NT 7 (Melt Index 10, Density 0.952), HDPE 17450N (Melt Index 17, Density 0.950), DMDA-8920 NT 7 (Melt Index 20, Density 0.954), DMDA 8940 NT 7 (Melt Index 44, Density 0.951), DMDA-8950 NT 7 (Melt Index 50, Density 0.942), DMDA-8965-NT 7 (Melt Index 66, Density 0.952), DMDC-1210 NT7 (Melt Index 10, Density 0.952) all available from The Dow Chemical Company. Other exemplary HDPEs may include HDPE HD6601.29 (Melt Index 5, Density 0.948) and HDPE HD6733.17 (Melt Index 33, Density 0.950) all available from Exxon Mobil; Alathon H5220 (Melt Index 20, Density 0.952) and Alathon M4661 (Melt Index 6.1, Density 0.946) all available from Lyondell Basell; Lutene H Me8000 (Melt Index 8.0, density 0.957) available from LG Chem; and HDPE CC254 (Melt Index 2.1, Density of 0.953) available from Sabic.

The thermoplastic material may also include a linear low density polyethylene or a low density polyethylene (LDPE), functionalized polyolefin or combination thereof. LDPE means a polyethylene that have been radically polymerized at high pressure resulting in substantial branching compared to HDPE and linear low density polyethylene (LLDPE). Typically, the LDPE has a density from about 0.91 to about 0.93 and a melt index of about 0.1 to 50 and more typically from about 0.5 to 40. Exemplary commercially available LDPEs that may be suitable include those available from The Dow Chemical Company (Midland MI) such as LDPE 150E ((Melt Index 0.25, Density 0.921) LDPE 421E ((Melt Index 3.2, Density 0.930) LDPE 780E ((Melt Index 20, Density 0.923) LDPE 722 ((Melt Index 8, Density 0.918), AGILITY 1021 (Melt Index 1.9, Density 0.919HP7023 (Melt Index 7.0, Density 0.932) from Sabic,), Lupolen 1800S (Melt Index 20, Density 0.917) from Lyondell Basell, LDPE LD 102.LC (Melt Index (6.8, Density 0.921) and LDPE LD 136.MN (Melt Index 2.0, Density 0.912) from Exxon Mobil.

A functionalized polyolefin is a polyolefin comprising atoms other than carbon and hydrogen, for example, the functionalized polyolefin may be modified with hydroxyl, an amine, an aldehyde, an epoxide, an ethoxylate, a carboxylic acid, an ester, an anhydride group, or combinations thereof. Generally, a functionalized polyolefin comprises functional groups such as protonated (-COOH) or non-protonated (-COO-) acid groups or acid salt include ethylene/acrylic acid copolymer (for example, polymers sold under the tradename PRIMACOR™ (a trademark of The Dow Chemical Company ("Dow")), NUCREL™ (a trademark of E.I. Du Pont de Nemours and Company) and ESCOR™ (ESCOR is a trademark of Exxon Corporation)), ethylene/methacrylic acid copolymers (for example, polymers sold under the tradename NUCREL™), maleic anhydride modified polyolefins (for example polymers sold under the tradenames LICOCENE™ (a trademark of Clariant AG Corporation), EPOLENE™ (EPOLENE is a trademark of Westlake Chemical Corporation) and MORPRIME™ (a trademark of Rohm and Hass Chemicals LLC)). Ethylene ester copolymers such as those modified with vinyl acetate (ELVAX, E. I. du Pont de Nemours and Company, Wilmington DE ("DuPont")), Acrylate modified (ELVALOY available from Dupont) and AMPLIFY (Dow)). Likewise, subsequent ionomers of the functionalized polyolefins formed via neutralization with cations from metals such as Zn, Na, Mg or K, with an example being SURLYN available from Dupont.

In one embodiment, the thermoplastic material is in the form of pellets that are subsequently heated and extruded during the additive manufacturing process. In another embodiment, the thermoplastic material is in the form of a filament. Each of these may be made by processes known in the art.

In one embodiment the thermoplastic material has one or more optional components such as a pigment, filler, lubricant, slip agent, or flame retardant so long as the majority of the blend is HDPE. Other components may include additives to improve one or more properties or functionalities such as compatibilization of the all the polymers employed in the thermoplastic material, but generally further compatibilization agents are not necessary when using the olefin block copolymer and in particular the BC or CBC, which may act as a compatibilizer. The thermoplastic material may include inorganic particles typically referred to as fillers, and dyes and anti-caking/flow control agents (e.g., fumed silica). The dyes may be inorganic (e.g., carbon black or mixed metal oxide pigments) or organic dyes such as inoaniline, oxonol, porphine derivative, anthaquinones, mesostyryl, pyrilium and squarylium derivative compounds. Fillers may be any typical fillers used in plastics such as calcium carbonate, silicates, oxides (quartz, alumina or titania).

The method produces a novel additive manufactured article comprised of at least two layers adhered together, at least one layer being comprised of a thermoplastic material comprised of an olefin block copolymer, wherein the olefin block copolymer is comprised of an isotactic polypropylene block and a polyethylene rich block. Typically, the layers are formed by and comprised of extrudates. Preferably, the layers are comprised of the olefin block copolymer and in particular the block composite or crystalline block composite or mixture thereof. The olefin block copolymer is comprised of an isotactic polypropylene block and a polyethylene rich block as described above. Even though the article may contain other materials described above other than the olefin block copolymer and polymers it is compatible with, it is desirable that the article does not have such other materials except for having homopolymers of essentially composition as described for the BC and CBC above. In one embodiment the article is solely comprised the BC, CBC or mixture thereof. In another embodiment, the article is solely comprised of the BC, CBC, mixture thereof and at least one other compatible polymer.

TEST METHODS

Melt flow rate (MFR) is measured in accordance with ASTM D-1238 (230°C; 2.16 kg). The result is reported in grams/10 minutes. Melt index (MI) is measured in accordance with ASTM D-1238 (190°C; 2.16 kg). The result is reported in grams/10 minutes.

Differential Scanning Calorimetry (DSC)

Differential Scanning Calorimetry (DSC) can be used to measure the melting, crystallization, and glass transition behavior of a polymer over a wide range of temperature. For example, the TA Instruments Q1000 DSC, equipped with an RCS (refrigerated cooling system) and an autosampler was used to perform this analysis. During testing, a nitrogen purge gas flow of 50 ml/min was used. Each sample was melt pressed into a thin film at 190°C; the melted sample was then air-cooled to room temperature (25°C). A 3-10 mg, 6 mm diameter specimen was extracted from the cooled polymer, weighed, placed in a light aluminum pan (50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C and held isothermal for 3 minutes in order to remove its thermal history. Next, the sample was cooled to -80°C at a 10°C/minute cooling rate and held isothermal at -80°C for 3 minutes. The sample was then heated to 180°C (this is the "second heat" ramp) at a 10°C/minute heating rate. The cooling and second heating curves were recorded. The values determined are extrapolated onset of melting, $T_m$, and extrapolated onset of crystallization, $T_c$. The heat of fusion (Hf) (also known as melt enthalpy) and the peak melting temperature were reported from the second heat curve. Melting point, $T_m$, was determined from the DSC heating curve by first drawing the baseline between the start and end of the melting transition. A tangent line was then drawn to the data on the low temperature side of the melting peak. Where this line intersects the baseline is the extrapolated onset of melting ($T_m$). This is as described in Bernhard Wunderlich, The Basis of Thermal Analysis, in Thermal Characterization of Polymeric Materials 92, 277-278 (Edith A. Turi ed., 2d ed. 1997). The melting point is the peak temperature.

$^{13}$C Nuclear Magnetic Resonance (NMR)

Sample Preparation: samples were prepared by adding approximately 2.6g of a 50/50 mixture of tetrachloroethane-d2/orthodichlorobenzene that was 0.025M in chromium acetylacetonate (relaxation agent) to 0.21 g sample in a 10mm NMR tube. The samples were dissolved and homogenized by heating the tube and its contents to 135-140°C.

Data Acquisition Parameters: data was collected using a Bruker 400 MHz spectrometer equipped with a Bruker Dual DUL high-temperature CryoProbe. The data was acquired using 320 transients per data file, a 7.3 sec pulse repetition delay (6 sec delay + 1.3 sec acq. time), 90 degree flip angles, and inverse gated decoupling with a sample temperature of 120°C. All measurements were made on non-spinning samples in locked mode. Samples were homogenized immediately prior to insertion into the heated (125°C) NMR Sample changer, and were allowed to thermally equilibrate in the probe for 7 minutes prior to data acquisition. The acquisitions were carried out using spectral width of 25,000Hz and a file size of 65K data points. The NMR is used to determine total weight percent of ethylene of whole polymer, the weight percent of ethylene in xylene soluble fraction, e.g., with respect to the crystalline block composite index or block composite index discussed below. Melt index (MI) (I2) is measured according to ASTM D1238, Condition 190°C/2.16 kilogram (kg) weight, and is reported in grams eluted per 10 minutes (g/10 min).

Gel Permeation Chromatography (GPC) for molecular weight

A high temperature gel permeation chromatography (GPC) system such as unit from Agilent Technology, and PolymerChar (Valencia, Spain) were used. The concentration detector was an Infra-red detector (IR-5) from Polymer Char Inc. Data collection was performed usingGPCOne (PolymerChar) The carrier solvent was 1,2,4-trichlorobenzene (TCB). The system was equipped with an on-line solvent degas device from Agilent. The column compartment was operated at 150°C. The columns were four Mixed A LS 30 cm, 20 micron columns. The solvent was nitrogen-purged TCB containing approximately 200 ppm 2,6-di-t-butyl-4-methylphenol (BHT). The flow rate was 1.0 mL/min, and the injection volume was 200 µl. A "2 mg/mL" sample concentration was prepared by dissolving the sample in N2 purged and preheated TCB (containing 200 ppm BHT), for 2.5 hours at 160°C, with gentle agitation.

The GPC column set was calibrated by running twenty narrow molecular weight distribution polystyrene standards. The molecular weight (MW) of the standards ranges from 580 g/mol to 8,400,000 g/mol, and the standards were contained in six "cocktail" mixtures. Each standard mixture had at least a decade of separation between individual molecular weights. The equivalent polypropylene molecular weights of each PS standard were calculated by using following equation, with reported Mark-Houwink coefficients for polypropylene (Th.G. Scholte, N.L.J. Meijerink, H.M. Schoffeleers, & A.M.G. Brands, J. Appl. Polym. Sci., 29, 3763-3782 (1984)) and polystyrene (E.P. Otocka, R.J. Roe, N.Y. Hellman, & P.M. Muglia, Macromolecules, 4, 507 (1971)).

High Temperature Liquid Chromatography (HTLC)

High Temperature Liquid Chromatography (HTLC) Experimental Method Instrumentation was performed according to the published method of D. Lee et al., J. Chromatogr. A 2011, 1218, 7173, with minor modifications. Two Shimadzu (Columbia, MD, USA) LC-20AD pumps were used to deliver decane and trichlorobenzene (TCB), respectively. Each pump was connected to a 10:1 fixed flow splitter (Part #: 620-PO20-HS, Analytical Scientific Instruments Inc., CA, USA). The splitter had a pressure drop of 1500 psi (10.34 MPa) at 0.1 mL/min in H2O according to the manufacturer. The flow rate of both pumps was set at 0.115 mL/min. After the splitting, the minor flow was 0.01 mL/min for both decane and TCB, determined by weighing the collected solvents for more than 30 min. The volume of the collected eluent was determined by the mass and the densities of the solvents at room temperature. The minor flow was delivered to the HTLC column for separation. The main flow was sent back to the solvent reservoir. A 50-µL mixer (Shimadzu) was connected after the splitters to mix the solvents from the Shimadzu pumps. The mixed solvents were then delivered to the injector in the oven of Waters (Milford, MA, USA) GPCV2000. A Hypercarb™ column (2.1 × 100 mm, 5 µm particle size) was connected between the injector and a 10-port VICI valve (Houston, TX, USA). The valve was equipped with two 60-μL sample loops. The valve was used to continuously sample eluent from the first dimension (D1) HTLC column to the second dimension (D2) SEC column. The pump of Waters GPCV2000 and a PLgel Rapid™-M column (10 × 100 mm, 5 μm particle size) were connected to the VICI valve for D2 size exclusion chromatography (SEC). The symmetric configuration was used for the connections as described in the literature (Y. Brun & P. Foster, J. Sep. Sci. 2010, 33, 3501). A dual-angle light scattering detector (PD2040, Agilent, Santa Clara, CA, USA) and an IR5 inferred absorbance detector were connected after the SEC column for measurement of concentration, composition, and molecular weight.

Separation for HTLC: Approximately 30 mg were dissolved in 8-mL decane by gently shaking the vial at 160°C for 2 hours. The decane contained 400 ppm BHT(2,6-Di-tert-butyl-4-methylphenol) as the radical scavenger. The sample vial was then transferred to the autosampler of GPCV2000 for injection. The temperatures of the autosampler, the injector, both the Hypercarb and the PLgel columns, the 10-port VICI valve, and both the LS and IR5 detectors were maintained at 140°C throughout the separation.

The initial conditions before injection were as follows: flow rate for the HTLC column was 0.01 mL/min; solvent composition in the D1 Hypercarb column was 100% decane; flow rate for the SEC column was 2.51 mL/min at room temperature; solvent composition in the D2 PLgel column was 100% TCB; solvent composition in the D2 SEC column did not change throughout the separation.

A 311-μL aliquot of sample solution was injected into the HTLC column. The injection triggered the gradient described below:

from 0 - 10 min, 100% decane/ 0% TCB;

from 10 - 651 min, TCB was increased linearly from 0% TCB to 80% TCB.

The injection also triggered the collection of the light scattering signal at 15° angle (LS15) and the "measure" and "methyl" signals from IR5 detector (IRmeasure and IRmethyl) using EZChrom™ chromatography data system (Agilent). The analog signals from detectors were converted to digital signals through a SS420X analog-to-digital converter. The collection frequency was 10 Hz. The injection also triggered the switch of the 10-port VICI valve. The switch of the valve was controlled by the relay signals from the SS420X converter. The valve was switched every 3 min. The chromatograms were collected from 0 to 651 min. Each chromatogram consisted of 651/3 = 217 SEC chromatograms.

After the gradient separation, 0.2 mL of TCB and 0.3 mL of decane were used to clean and re-equilibrate the HTLC column for next separation. The flow rate of this step was 0.2 mL/min, delivered by a Shimadzu LC-20 AB pump connected to the mixer.

Xylene Soluble (XS) Fractionation Analysis (ASTM D5492-17)

A weighed amount of resin (2.0000±0.1000, g) was dissolved in 200 ml o-xylene under reflux conditions. The solution was then cooled in a temperature controlled water bath to 25°C for 60 minutes to allow the crystallization of the xylene insoluble (XI) fraction. Once the solution was cooled and the insoluble fraction precipitates from the solution, the separation of the xylene soluble (XS) fraction from the xylene insoluble fraction (XI) was done by filtration through a filter paper. The remaining o-xylene in xylene solution was evaporated from the filtrate, dried according ASTM D5492-17. The ethylene content in the dried xylene soluble fraction (wt% C2 in xylene soluble) was measured by using NMR method specified herein.

Thermal gradient interaction chromatography (TGIC)

A commercial Crystallization Elution Fractionation instrument (CEF) (Polymer Char, Spain) was used to perform the thermal gradient interaction chromatography (TGIC) measurement (Cong, et al., Macromolecules, 2011, 44 (8), 3062-3072). A single Hypercarb column (100 X 4.6 mm, 5 micron particles, Thermo Scientific) was used for separation. The experimental parameters were: top oven/transfer line/needle temperature at 160°C, dissolution temperature at 160°C, dissolution stirring setting of 2, pump stabilization time of 15 seconds, a pump flow rate of cleaning column at 0.500 mL/m, pump flow rate of column loading at 0.300 ml/min, stabilization temperature at 160°C, stabilization time (pre, prior to load to column ) at 1.0 min, stabilization time (post, after loaded to column) at 1.0 min, SF( Soluble Fraction) time at 8.0 min, cooling rate of 5.0°C/min from 160°C to 90°C, flow rate during cooling process of 0.01 ml/min, isothermally held at 90 °C for 10 minutes, heating rate of 5.0°C/min during elution from 90°C to 160°C, isothermal time at 150°C for 10 min, elution flow rate of 0.500 mL/min, and an injection loop size of 140 microliters. Samples were prepared by the PolymerChar autosampler at 160°C, for 120 minutes, at a concentration of 4.0 mg/ml in ODCB (1,2-Dichlorobenzene, anhydrous grade or HPLC grade). TGIC column temperature calibration is done according to the reference (Cerk and Cong, US 9,688,795).

The chromatogram consists of two peaks. The first peak is defined as free iPP peak, which is defined as the material remaining in ODCB at 90°C, the percentage of free iPP peak is calculated by the area of the first peak /total area of the chromatogram multiplying by 100%. The chromatogram is integrated with "GPCOne" software (PolymerChar, Spain). A straight baseline is drawn from the visible difference, when the 2nd peak falls to a flat baseline at high elution temperature, and the minimum or flat region of detector signal on the low temperature side of the first peak. The upper temperature integration limit is established, based on the visible difference, when the 2nd peak falls to the flat baseline region (roughly around 170°C). The upper temperature integration limit for the first peak is established, based on the intersection point of baseline with the chromatogram including the first peak. The lower temperature integration limit of the first peak is based on the intersection point of baseline with the chromatogram before the first peak.

EXAMPLES

Materials:

The materials to make the additive manufactured articles appear in Table 1. Purchased filaments were used as is; other resins were converted into 1.8 mm filament using a Noztek single screw extruder.

Table 1

| Name | Material | Commercial Source | Information |
|------|----------|-------------------|-------------|
| 3D Universe ABS Filament | Acrylonitrile Butadiene Styrene | 3D Universe | |
| DMDA 8940 - NT-7 | High Density Polyethylene | Dow | 44 g/10min MI @ 190C, Density: 0.951 g/cc, Mp: 128 C |
| D115A | Polypropylene homopolymer | Braskem | 11 g/10 min MFR @230C, homopolymer polypropylene |
| DOWLEX 2045G | Linear Low Density Polyethylene | Dow | 2.5 g/10 min MI @ 190 C, 0.919 g/cc density |
| AFFINITY EG 8200G | Ultra Low Density Polyethylene | Dow | 5.0 g/10 min MI @ 190 C, 0.870 g/cc density |
| CBC1 | Polypropylene block Copolymer | | 9.5 g/10 min MFR@230C, EP/iPP 50/50, 92% C2 in EP |
| BC1 | Polypropylene Block Copolymer | | 6.5 g/10 min MFR@230C, EP/iPP 50/50, 65% C2 in EP |
| CBC2 | Polypropylene block Copolymer | | 7.1 g/10 min MFR @ 230C, EP/iPP 50/50, 65% C2 in EP |
| CBC3 | Polypropylene block Copolymer | | 23.5 g/10 min MFR @ 230C, EP/iPP 30/70, 92% C2 in EP |
| CBC4 | Polypropylene block Copolymer | | 18.5 g/10 min MFR @ 230C, EP/iPP 70/30, 92% C2 in EP |

MI = melt index, MP = melting point; MFR = Melt Flow Rate; EP = ethylene propylene random copolymer; iPP = isotactic polypropylene; C2 = ethylene; CBC = Crystalline Block composite polymer; BC = Block Composite.

CBC1 to CBC4 as well as BC1 polymers that can be used in embodiments of the present invention, may be prepared by a process comprising contacting an addition polymerizable monomer or mixture of monomers under addition polymerization conditions with a composition comprising at least one addition polymerization catalyst, at least one cocatalyst, and a chain shuttling agent, said process being characterized by formation of at least some of the growing polymer chains under differentiated process conditions in two or more reactors operating under steady state polymerization conditions or in two or more zones of a reactor operating under plug flow polymerization conditions. The term, "shuttling agent" refers to a compound or mixture of compounds that is capable of causing polymeryl exchange between at least two active catalyst sites under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. In a preferred embodiment, the crystalline block composites comprise a fraction of block polymer which possesses a most probable distribution of block lengths.

Suitable processes useful in producing CBC1 to CBC4 and BC1 may be found, for example, in U.S. Patent Application Publication No. 2008/0269412, published on Oct. 30, 2008. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes.

When producing a block polymer having a crystalline ethylene block (CEB) and a crystalline alpha-olefin block (CAOB) in two reactors or zones it is possible to produce the CEB in the first reactor or zone and the CAOB in the second reactor or zone or to produce the CAOB in the first reactor or zone and the CEB in the second reactor or zone. It may be more advantageous to produce CEB in the first reactor or zone with fresh chain shuttling agent added. The presence of increased levels of ethylene in the reactor or zone producing CEB may lead to much higher molecular weight in that reactor or zone than in the zone or reactor producing CAOB. The fresh chain shuttling agent will reduce the MW of polymer in the reactor or zone producing CEB thus leading to better overall balance between the length of the CEB and CAOB segments.

When operating reactors or zones in series it is necessary to maintain diverse reaction conditions such that one reactor produces CEB and the other reactor produces CAOB. Carryover of ethylene from the first reactor to the second reactor (in series) or from the second reactor back to the first reactor through a solvent and monomer recycle system is preferably minimized. There are many possible unit operations to remove this ethylene, but because ethylene is more volatile than higher alpha olefins one simple way is to remove much of the unreacted ethylene through a flash step by reducing the pressure of the effluent of the reactor producing CEB and flashing off the ethylene. An exemplary approach is to avoid additional unit operations and to utilize the much greater reactivity of ethylene versus higher alpha olefins such that the conversion of ethylene across the CEB reactor approaches 100%. The overall conversion of monomers across the reactors can be controlled by maintaining the alpha olefin conversion at a high level (90 to 95%).

Exemplary catalysts and catalyst precursors for use to from the crystalline block composite include metal complexes such as disclosed in, e.g., International Publication No WO 2005/090426. Other exemplary catalysts are also disclosed in U.S. Patent Publication Nos. 2006/0199930, 2007/0167578, and 2008/0311812; U.S. Patent No. 7,355,089; and International Publication No. WO 2009/012215.

The crystalline block composites (CBC1 to CBC4) is characterized as appropriate by Differential Scanning Calorimetry (DSC), C13 Nuclear Magnetic Resonance (NMR), Gel Permeation Chromatography (GPC), and high temperature liquid chromatography (HTLC) fractionation. These are described in more detail in US Patent Application Publication Nos US2011-0082257, US2011-0082258 and US2011-0082249, all published on April 7, 2011 and are relevant with respect to descriptions of the analysis methods.

As shown in Table 2, the CBC samples (CBC1 to CBC4) and the BC sample (BC1) are further characterized by the indicated:

Wt% PP - Weight percentage propylene polymer in the CBC or BC as measured by HTLC Separation as described above.

Mw - the weight average molecular weight of the CBC or BC in Kg/mol as determined by GPC as described above.

Mw/Mn - the molecular weight distribution of the CBC or BC as determined by GPC as described above.

Total Wt% C2 - the weight percentage of ethylene in the CBC or BC as determined by NMR, the balance being propylene.

Tm (°C) Peak 1 (Peak 2) - Peak melting temperature as determined by the second heating curve from DSC. Peak 1 refers to the melting of CEB / CEP (for CBC), or EB / EP for (BC), whereas Peak 2 refers to the melting of CEB or CEP.

Tc (°C) - Peak crystallization temperature as determined by DSC cooling scan.

Table 2

| | MFR (230°C/2.16 kg) (g/10 min) | wt% PP from HTLC Separation | Mw (kg/mol) | Mw/Mn | Total wt% $C_2$ (NMR) | Tm (°C) Peak 1/ Peak 2 | Tc (°C) |
|---|---|---|---|---|---|---|---|
| CBC 1 | 9.5 | 19.9 | 104 | 2.73 | 47.6 | 108 / 130 | 88 |
| CBC 2 | 7.1 | 19.2* | 101 | 3.27 | 507 | 123 / 135 | 110 |
| CBC 3 | 23.5 | 27.1 | 127 | 4.26 | 28.8 | 105 / 136 | 94 |
| CBC 4 | 18.5 | 6.1 | 99 | 2.86 | 69.6 | 121 / 133 | 108 |
| BC 1 | 6.5 | 25.3 | 96 | 2.34 | 31.7 | 43/136 | 91 |
| * Measured with TGIC | | | | | | | |

Printing:

Parts were printed on a Hyrel system 30 M, which is commercially available from Hyrel 3D, Norcross, Georgia (USA). Small three dimensional boxes (with dimensions 4 cm $\times$ 2 cm $\times$ 5 mm) with layer height 0.2 mm with 100% rectilinear infill were printed. Printer bed temp was 95 °C, while nozzle temp ranged from 160 to 240 °C.

The print quality was in part determined by measuring the corner gap height of the corners from flat. If the part was not printed fully, it was either because of large distortions and gaps during printing rendering further printing useless, or the filament could not be extruded due to buckling. The results of the Examples and Comparative Example parts printed is shown in Table 3. Comparative Example 4 was tested at 100°C, 120°C, 140°C and 160°C with all samples failing.

Table 3

| Example | Material | Printing Temp (°C) | Completed Printing Full Part | Avg Corner Gap Height (mm) |
|---|---|---|---|---|
| **Comp 1** | 3D Universe ABS Filament | **240** | **Y** | **1.4** |
| **Comp 2** | DMDA 8940 - NT-7 | **180** | **N, gaps** | - |
| **Comp 3** | DOWLEX 2045G | **180** | **N, gaps** | - |
| **Comp 4** | AFFINITY EG 8200G | **100/120/140/160** | **N, buckling** | - |
| **Ex 1** | **CBC1** | **160** | **Y** | **0** |
| **Ex 2** | **CBC2** | **180** | **Y** | **0** |
| **Ex 3** | **CBC3** | **180** | **Y** | **0** |
| **Ex 4** | **CBC4** | **180** | **Y** | **0** |
| **Ex 5** | **BC1** | **180** | **Y** | **0** |

*A. Crystalline Block Composite Index (CBCI) Calculations*

CBCI provides an estimate of the quantity of block copolymer within the CBC under the assumption that the ratio of CEB to CAOB within the diblock is the same as the ratio of ethylene to $\alpha$-olefin in the overall CBC. This assumption is valid for these statistical olefin block copolymers based on the understanding of the individual catalyst kinetics and the polymerization mechanism for the formation of the diblocks via chain shuttling catalysis as described in the specification. This CBCI analysis shows that the amount of isolated PP is less than if the polymer were a simple blend of a propylene homopolymer (in these examples, the CAOP) and polyethylene (in these examples, the CEP). Consequently, the polyethylene fraction contains an appreciable amount of propylene that would not otherwise be present if the polymer were simply a blend of polypropylene and polyethylene. To account for this "extra propylene," a mass balance calculation can be performed to estimate the CBCI from the amount of the polypropylene and polyethylene fractions and the wt% propylene present in each of the fractions that are separated by HTLC. The corresponding CBCI calculations for CBC1-CBC4 are provided in Tables 4 and 5.

Referring to Tables 3 and 4, the CBCI is measured by first determining a summation of the weight percent propylene from each component in the polymer according to Equation 1, below, which results in the overall wt% propylene/$C_3$ (of the whole polymer). This mass balance equation can be used to quantify the amount of the PP and PE present in the block copolymer. This mass balance equation can also be used to quantify the amount of PP and PE in a binary blend or extended to a ternary, or n-component blend. For CBC, the overall amount of PP or PE was contained within the blocks present in the block copolymer and the unbound PP and PE polymers.

$$wt\%C_{3\,overall} = w_{PP}(wt\%C_{3\,PP}) + w_{PE}(wt\%C_{3\,PE}) \qquad \text{Equation 1}$$

where $w_{PP}$ is the weight fraction of PP in the polymer; $w_{PE}$ is the weight fraction of PE in the polymer; $wt\%C_{3\,PP}$ is the weight percent of propylene in the PP component or block; and $wt\%C_{3\,PE}$ is the weight percent of propylene in the PE component or block.

Note that the overall weight percent of propylene ($C_3$) is measured from $C^{13}$ NMR or some other composition measurement that represents the total amount of $C_3$ present in the whole polymer. The weight percent propylene in the PP block ($wt\%C_{3\,PP}$) is set to 100 (if applicable) or if otherwise known from its DSC melting point, NMR measurement, or other composition estimate, that value can be put into its place. Similarly, the weight percent propylene in the PE block ($wt\%C_{3\,PE}$) is set to 100 (if applicable) or if otherwise known from its DSC melting point, NMR measurement, or other composition estimate, that value can be put into its place. The weight percent of $C_3$ is shown in Table 4.

Based on Equation 1, the overall weight fraction of PP present in the polymer can be calculated using Equation 2 from the mass balance of the total $C_3$ measured in the polymer. Alternatively, it could also be estimated from a mass balance of the monomer and comonomer consumption during the polymerization. Overall, this represents the amount of PP and PE present in the polymer regardless of whether it is present in the unbound components or in the block copolymer. For a conventional blend, the weight fraction of PP and weight fraction of PE corresponds to the individual amount of PP and PE polymer present. For the CBC, it is assumed that the ratio of the weight fraction of PP to PE also corresponds to the average block ratio between PP and PE present in this statistical block copolymer.

$$w_{PP} = \frac{wt\%C_{3\,overall} - wt\%C_{3\,PE}}{wt\%C_{3\,PP} - wt\%C_{3\,PE}} \qquad \text{Equation 2}$$

where $w_{PP}$ is the weight fraction of PP in the polymer; $wt\%C_{3\,PP}$ is the weight percent of propylene in the PP component or block; and $wt\%C_{3\,PE}$ is the weight percent of propylene in the PE component or block.

To estimate the amount of the block copolymer (diblock) in the CBC, Equations 3 through 5 are applied, and the amount of the isolated PP that is measured by HTLC analysis is used to determine the amount of polypropylene present in the diblock copolymer. The amount isolated or separated first in the HTLC analysis represents the 'unbound PP' and its composition is representative of the PP block present in the diblock copolymer. By substituting the overall weight percent $C_3$ of the whole polymer in the left hand side of Equation 3, and the weight fraction of PP (isolated from HTLC) and the weight fraction of PE (separated by HTLC) into the right hand side of Equation 3, the weight percent of $C_3$ in the PE fraction can be calculated using Equations 4 and 5. The PE fraction is described as the fraction separated from the unbound PP and contains the diblock and unbound PE. The composition of the isolated PP is assumed to be the same as the weight percent propylene in the PP block as described previously.

$$wt\% C_{3\,overall} = w_{PP\,isolated}(wt\%C_{3\,PP}) + w_{PE-fraction}\left(wt\%C_{3\,PE-fraction}\right) \quad \text{Equation 3}$$

$$wt\%C_{3\,PE-fraction} = \frac{wt\%C_{3\,overall} - w_{PP\,isolated}(wt\%C_{3\,PP})}{w_{PE-fraction}} \qquad \text{Equation 4}$$

$$w_{PE-fraction} = 1 - w_{PP\,isolated} \qquad \text{Equation 5}$$

where $w_{PP\,isolated}$ is the weight fraction of isolated PP from HTLC; $w_{PE-fraction}$ is the weight fraction of PE separated from HTLC, containing the diblock and unbound PE; $wt\%C_{3\,PP}$ is the wt% of propylene in the PP; which is also the same amount of propylene present in the PP block and in the unbound PP; $wt\%C_{3\,PE-fraction}$ is the wt% of propylene in the PE-fraction that was separated by HTLC; and $Wt\%C3_{overall}$ is the overall wt% propylene in the whole polymer.

The amount of wt% $C_3$ in the polyethylene fraction from HTLC represents the amount of propylene present in the block copolymer fraction that is above the amount present in the 'unbound polyethylene.' To account for the 'additional' propylene present in the polyethylene fraction, the only way to have PP present in this fraction, is that the PP polymer chain must be connected to a PE polymer chain (or else it would have been isolated with the PP fraction separated by HTLC). Thus, the PP block remains adsorbed with the PE block until the PE fraction is separated.

The amount of PP present in the diblock is calculated using Equation 6.

$$w_{PP-diblock} = \frac{wt\%C_{3\,PE-fraction} - wt\%C_{3\,PE}}{wt\%C_{3\,PP} - wt\%C_{3\,PE}} \qquad \text{Equation 6}$$

where $wt\%C_{3\,PE\text{-}fraction}$ is the wt% of propylene in the PE-fraction that was separated by HTLC (Equation 4); $wt\%C_{3\,PP}$ is the wt% of propylene in the PP component or block (defined previously); $wt\%C_{3\,PE}$ is the wt% of propylene in the PE component or block (defined previously); and $w_{PP\text{-}diblock}$ is the weight fraction of PP in the diblock separated with PE-fraction by HTLC.

The amount of the diblock present in this PE fraction can be estimated by assuming that the ratio of the PP block to PE block is the same as the overall ratio of PP to PE present in the whole polymer. For example, if the overall ratio of PP to PE is 1: 1 in the whole polymer, then it assumed that the ratio of PP to PE in the diblock is also 1:1. Thus, the weight fraction of diblock present in the PE fraction would be weight fraction of PP in the diblock ($w_{PP\text{-}diblock}$) multiplied by two. Another way to calculate this is by dividing the weight fraction of PP in the diblock ($w_{PP\text{-}diblock}$) by the weight fraction of PP in the whole polymer (Equation 2).

To further estimate the amount of diblock present in the whole polymer, the estimated amount of diblock in the PE fraction is multiplied by the weight fraction of the PE fraction measured from HTLC. To estimate the crystalline block composite index, the amount of diblock copolymer is determined by Equation 7. To estimate the CBCI, the weight fraction of diblock in the PE fraction calculated using Equation 6 is divided by the overall weight fraction of PP (as calculated in Equation 2) and then multiplied by the weight fraction of the PE fraction.

$$CBCI = \frac{w_{PP-diblock}}{w_{PP}} \times w_{PE-fraction} \qquad \text{Equation 7}$$

where $w_{PP\text{-}diblock}$ is the weight fraction of PP in the diblock separated with the PE-fraction by HTLC (Equation 6); $w_{PP}$ is the weight fraction of PP in the polymer; and $w_{PE\text{-}fraction}$ is the weight fraction of PE separated from HTLC, containing the diblock and unbound PE (Equation 5).

*B. Block Composite Index (BCI) Calculations*

The term Block Composite Index (BCI) is herein defined as the weight percentage of the block copolymer divided by 100% *(i.e.,* weight fraction). The value of the BCI can range from 0 up to 1.0, where 1.0 would be equal to 100% of the block copolymer and zero would be for material such as a traditional blend or random copolymer. Said in another way, for an xylene insoluble fraction, the BCI is 1.0, and for a xylene soluble fraction, the BCI is assigned a value of zero.

The detailed steps for calculation are:

1. Measure the ethylene content of the whole polymer by $^{13}$C NMR (Overall $wt\%C_{2\,Total}$)

2. Calculate the ethylene content in PP block (wt% C2 in PP block/polymer, also named as $wt\%C_{2\,iPP\,hard}$) from monomer and comonomer feed rates during polymerization process. Alternatively, it can be calculated from DSC melting temperature by using a correlation between Tm of DSC and ethylene content in random propylene ethylene copolymers.

3. Calculate the ethylene content in EP block/polymer (wt% C2 in EP block/polymer, or $wt\%C_{2\,EP\,soft}$) from monomer and comonomer feed rates during polymerization process. Alternatively, it can be also calculated from DSC melting temperature by using a correlation between Tm of DSC and ethylene content in a random propylene ethylene copolymers.

4. Calculate the ethylene content in XI ($wt\%C_{2\,xylene\,insoluble,\,or}\,wt\%C_{2\,insoluble}$) from the equation 8, where $w_{insoluble}$ is the weight fraction of XI; $w_{soluble}$ is the weight fraction of XS, measured from ASTM5492-17. Weigh % ethylene content in XS ($wt\%C_{2\,soluble}$) is measured from $^{13}$C NMR on XS fraction.

$$wt\%C_{2\,overall} = w_{insoluble}(wt\%C_{2\,insoluble}) + w_{soluble}(wt\%C_{2\,soluble}) \qquad \text{Equation 8}$$

5. Overall C2 content of the whole material follows the Equation 9.

$$wt\% C_{2\ overall} = w_{iPPhard}(wt\%C_{2\ iPP}) + w_{EPsoft}(wt\%C_{2\ EPsoft}) \quad \text{Equation 9}$$

6. Calculate weight fraction PP in Xylene insoluble (wt PP in XI, $w_{iPP\ hard}$) as (wt%C2 in XI minus Wt%C2 in EP block/polymer)/(wt%C2 in PP block/polymer minus Wt%C2 in EP block/polymer) according to equation 10:

$$w_{iPPhard} = \frac{wt\%C_{2\ xylene\ insoluble} - wt\%C_{2\ EPsoft}}{wt\%C_{2\ iPPhard} - wt\%C_{2\ EPsoft}} \quad \text{Equation 10}$$

7. Calculate weight fraction of EP in XI (wt fraction EP in XI, as called $W_{EPsoft}$) as (1- weight fraction PP in Xylene insoluble) according to equation 11.

8.

$$w_{EPsoft} = 1 - w_{iPPhard} \quad \text{Equation 11}$$

9. Calculate the weight fraction of diblock in XI (wt fraction Diblock in insoluble fraction) as weight fraction EP in XI divided by weigh fraction EP in block or polymer.

10. BCI is calculated as (wt fraction Diblock in insoluble fraction) multiplying with (wt fraction of xylene insoluble)

Estimation of BCI is based on showing that the insoluble fractions contain an appreciable amount of ethylene that would not otherwise be present if the polymer were simply a blend of iPP homopolymer and EP copolymer. To account for this "extra ethylene," a mass balance calculation can be performed to estimate a block composite index from the amount of xylene insoluble and soluble fractions and the weight percent ethylene present in each of the fractions (Carnahan et al., US 8,802,774)

The estimated properties of CBC 1 to CBC 4, and BC 1 are provided in Tables 4 and 5A and 5B.

Table 4

|  | wt% EP | wt% iPP | wt% C$_2$ in EP | wt% C$_2$ in iPP | CBCI | BCI |
|---|---|---|---|---|---|---|
| CBC 1 | 50 | 50 | 92 | 0.5 | 0.549 | N/A |
| CBC 2 | 50 | 50 | 98.3 | 0.5 | 0.608 | N/A |
| CBC 3 | 31 | 69 | 90 | 0.5 | 0.605 | N/A |
| CBC 4 | 77 | 23 | 90 | 0.5 | 0.734 | N/A |
| BC 1 | 50 | 50 | 65 | 0.5 | N/A | 0.335 |

Table 5A

| Line | Variable | Source | CBC 1 | CBC 2 | CBC 3 | CBC 4 |
|---|---|---|---|---|---|---|
| 1 | Overall wt% C3 Total | Measured | 52.4 | 49.3 | 71.2 | 30.4 |
| 2 | wt% C3 in PP block/polymer | Measured | 99.0 | 99.0 | 99.0 | 99.0 |
| 3 | wt% C3 in PE block/polymer | Measured | 10.5 | 1.70 | 10.5 | 10.0 |
| 4 | wt fraction PP (in block or polymer) | Eq. 2 below | 0.500 | 0.489 | 0.686 | 0.229 |
| 5 | wt fraction PE (in block or polymer) | 1-Line 4 | 0.500 | 0.511 | 0.314 | 0.771 |
|  | Analysis of HTLC Separation |  |  |  |  |  |
| 6 | wt fraction isolated PP | Measured | 0.199 | 0.192 | 0.271 | 0.061 |
| 7 | wt fraction PE fraction | Measured | 0.801 | 0.808 | 0.729 | 0.939 |
| 8 | wt% C3 in PE-fraction | Eq. 4 below | 40.8 | 37.5 | 60.9 | 25.9 |

(continued)

| Line | Variable | Source | CBC 1 | CBC 2 | CBC 3 | CBC 4 |
|------|----------|--------|-------|-------|-------|-------|
| 9 | wt fraction PP-diblock in PE fraction | Eq. 6 below | 0.343 | 0.368 | 0.569 | 0.179 |
| 10 | wt fraction PE in PE fraction | 1-Line 10 | 0.657 | 0.632 | 0.431 | 0.821 |
| 11 | wt fraction diblock in PE fraction | 10/Line 4 | 0.685 | 0.752 | 0.830 | 0.782 |
| 12 | CBCI | Eq. 7 below | 0.549 | 0.608 | 0.605 | 0.734 |

Table 5B

| Line | Variable | Source | BC1 |
|------|----------|--------|-----|
| 1 | Overall wt% C2 Total | Measured by 13C NMR | 31.9 |
| 2 | wt% C2 in PP block/polymer | Measured | 0.5 |
| 3 | wt% C2 in EP block/polymer | Measured | 65.0 |
| 4 | wt fraction iPP (in block or polymer) | Calc. | 0.513 |
| 5 | wt fraction EP (in block or polymer) | Calc. | 0.487 |
| 6 | wt fraction xylene soluble | Measured* | 0.335 |
| 7 | wt fraction xylene insoluble | 1 - Line 6 | 0.665 |
| 8 | wt% C2 in xylene soluble | Measured by 13C NMR | 62.1 |
| 9 | wt% C2 in xylene insoluble | Calc. ** | 16.7 |
| 10 | wt fraction PP in insoluble | Calc. | 0.749 |
| 11 | wt fraction EP in insoluble fraction | 1 - Line 10 | 0.251 |
| 12 | wt fraction Diblock in insoluble fraction | Line 11/Line 5 | 0.516 |
| 13 | Block Composite Index (BCI) | Calc | 0.343 |
| * according ASTM D5492-17 with 60 minutes cooling at 25°C  ** Calculated as (Overall wt% C2 Total-wt fraction xylene soluble *wt% C2 in xylene insoluble)/wt fraction xylene insoluble) | | | |

**Claims**

1. A method of additive manufacturing comprising,

    (i) providing a thermoplastic material comprised of an olefin block copolymer, wherein the olefin block copolymer is comprised of an isotactic polypropylene block and a polyethylene rich block,
    (ii) heating and dispensing said thermoplastic material through a nozzle to form an extrudate deposited on a base,
    (iii) moving the base, nozzle or combination thereof while dispensing the thermoplastic material so that there is horizontal displacement between the base and nozzle in a predetermined pattern to form an initial layer of the material on the base, and
    (iv) repeating steps (ii) and (iii) to form a successive layer of the material adhered on the initial layer to form an additive manufactured part.

2. The method of Claim 1, wherein the isotactic polypropylene blocks are from 10% to 90% by mole of the olefin block copolymer with the remaining balance being the polyethylene rich blocks.

3. The method of Claim 2, wherein the isotactic polypropylene blocks are from 30% to 70% by mole with the remaining balance being the polyethylene rich blocks.

4. The method of Claim 2, wherein the polyethylene rich blocks on average are comprised of at least 60% by mole ethylene with the balance being propylene.

5. The method of Claim 4, wherein polyethylene rich blocks on average are comprised of at least 70% by weight ethylene with the balance being propylene.

6. The method of claim 3, wherein the block composite or crystalline block composite has a block composite index of 0.1 to 0.9.

7. The method of Claim 6, wherein the block composite index is 0.2 to 0.8.

8. An additive manufactured article comprised of at least two layers adhered together, at least one layer being comprised of a thermoplastic material comprised of an olefin block copolymer, **characterized in that** the olefin block copolymer is comprised of an isotactic polypropylene block and a polyethylene rich block.

9. The additive manufactured article of Claim 8, wherein the thermoplastic material is comprised of a block composite, crystalline block composite or mixture thereof having therein the block olefin copolymer.

10. The additive manufactured article of Claim 9, wherein the polyethylene rich blocks are comprised of more than 60% by mole of ethylene residue with the remaining balance being propylene residue.

**Patentansprüche**

1. Verfahren einer additiven Fertigung, umfassend,

    (i) Bereitstellen eines thermoplastischen Materials, das aus einem Olefinblockcopolymer besteht, wobei das Olefinblockcopolymer aus einem isotaktischen Polypropylenblock und einem polyethylenreichen Block besteht,
    (ii) Erwärmen und Abgeben des thermoplastischen Materials durch eine Düse, um ein Extrudat auszubilden, das auf eine Basis abgeschieden wird,
    (iii) Bewegen der Basis, der Düse oder einer Kombination davon, während das thermoplastische Material abgegeben wird, sodass eine horizontale Verschiebung zwischen der Basis und der Düse in einem zuvor bestimmten Muster vorliegt, um eine anfängliche Schicht des Materials auf der Basis auszubilden, und
    (iv) Wiederholen der Schritte (ii) und (iii), um eine nachfolgende Schicht des Materials auszubilden, die auf der anfänglichen Schicht haftet, um ein additiv gefertigtes Teil auszubilden.

2. Verfahren nach Anspruch 1, wobei die isotaktischen Polypropylenblöcke zu 10 Mol-% bis 90 Mol-% aus Olefinblockcopolymer bestehen, wobei der verbleibende Rest die polyethylenreichen Blöcke ist.

3. Verfahren nach Anspruch 2, wobei die isotaktischen Polypropylenblöcke von 30 Mol-% bis 70 Mol-% betragen, wobei der verbleibende Rest die polyethylenreichen Blöcke ist.

4. Verfahren nach Anspruch 2, wobei die polyethylenreichen Blöcke im Durchschnitt zu mindestens 60 Mol-% aus Ethylen bestehen, wobei der Rest Propylen ist.

5. Verfahren nach Anspruch 4, wobei polyethylenreiche Blöcke im Durchschnitt zu mindestens 70 Gew.-% aus Ethylen bestehen, wobei der Rest Propylen ist.

6. Verfahren nach Anspruch 3, wobei der Blockverbundstoff oder kristalline Blockverbundstoff einen Blockverbundstoffindex von 0,1 bis 0,9 aufweist.

7. Verfahren nach Anspruch 6, wobei der Blockverbundstoffindex 0,2 bis 0,8 beträgt.

8. Additiv gefertigter Artikel, der aus mindestens zwei aneinander haftenden Schichten besteht, wobei mindestens eine Schicht aus einem thermoplastischen Material besteht, das aus einem Olefinblockcopolymer besteht, **dadurch gekennzeichnet, dass** das Olefinblockcopolymer aus einem isotaktischen Polypropylenblock und einem polyethylenreichen Block besteht.

9. Additiv gefertigter Artikel nach Anspruch 8, wobei das thermoplastische Material aus einem Blockverbundstoff, einem kristallinen Blockverbundstoff oder einer Mischung davon besteht, die darin das Blockolefincopolymer aufweist.

**10.** Additiv gefertigter Artikel nach Anspruch 9, wobei die polyethylenreichen Blöcke zu mehr als 60 Mol-% aus Ethylenrückständen bestehen, wobei der verbleibende Rest ein Propylenrückstand ist.

## Revendications

**1.** Procédé de fabrication additive comprenant,

(i) la fourniture d'un matériau thermoplastique constitué d'un copolymère séquencé oléfinique, dans lequel le copolymère séquencé oléfinique est constitué d'une séquence de polypropylène isotactique et d'une séquence riche en polyéthylène,
(ii) le chauffage et la distribution dudit matériau thermoplastique à travers une buse pour former un extrudat déposé sur une base,
(iii) le déplacement de la base, de la buse ou d'une combinaison de ceux-ci tout en distribuant le matériau thermoplastique de sorte qu'il y a un déplacement horizontal entre la base et la buse dans un motif prédéterminé pour former une couche initiale du matériau sur la base, et
(iv) la répétition des étapes (ii) et (iii) pour former une couche successive du matériau fixé par adhésion à la couche initiale pour former une pièce construite par fabrication additive.

**2.** Procédé selon la revendication 1, dans lequel les séquences de polypropylène isotactique représentent de 10 % à 90 % en moles du copolymère séquencé oléfinique avec le solde restant étant les séquences riches en polyéthylène.

**3.** Procédé selon la revendication 2, dans lequel les séquences de polypropylène isotactique représentent de 30 % à 70 % en moles avec le solde restant étant les séquences riches en polyéthylène.

**4.** Procédé selon la revendication 2, dans lequel les séquences riches en polyéthylène en moyenne sont constituées d'au moins 60 % en moles d'éthylène avec le solde étant du propylène.

**5.** Procédé selon la revendication 4, dans lequel les séquences riches en polyéthylène en moyenne sont constituées d'au moins 70 % en poids d'éthylène avec le solde étant du propylène.

**6.** Procédé selon la revendication 3, dans lequel le composite séquence ou composite à séquences cristallines a un indice de composite séquence de 0,1 à 0,9.

**7.** Procédé selon la revendication 6, dans lequel l'indice de composite séquence va de 0,2 à 0,8.

**8.** Article construit par fabrication additive constitué d'au moins deux couches fixées par adhésion l'une à l'autre, au moins une couche étant constituée d'un matériau thermoplastique constitué d'un copolymère séquencé oléfinique, **caractérisé en ce que** le copolymère séquencé oléfinique est constitué d'une séquence de polypropylène isotactique et d'une séquence riche en polyéthylène.

**9.** Article construit par fabrication additive selon la revendication 8, dans lequel le matériau thermoplastique est constitué d'un composite séquencé, d'un composite à séquences cristallines ou d'un mélange de ceux-ci ayant à l'intérieur de celui-ci le copolymère oléfinique séquence.

**10.** Article construit par fabrication additive selon la revendication 9, dans lequel les séquences riches en polyéthylène sont constituées de plus de 60 % en moles de résidu éthylène avec le solde restant étant un résidu de propylène.

Fig. 1

Fig. 2

Fig. 3

Fig. 4

Ex. 1 CBC1 160°C

Fig. 5

Comp Ex.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5121329 A
- US 5503785 A
- WO 2016080573 A
- CN 104629152 A
- CN 105295175
- EP 3018152 A
- CN 106977809
- JP 2017197627 B
- JP 2017008432 B
- US 8822598 B
- US 8686087 B
- US 9511567 B
- US 9243090 B
- US 20110313106
- US 20110313108 A
- WO 2014043522 A1
- US 9688795 B, Cerk and Cong
- US 20080269412
- WO 2005090426 A
- US 20060199930 A
- US 20070167578 A
- US 20080311812 A
- US 7355089 B
- WO 2009012215 A
- US 20110082257 A
- US 20110082258 A
- US 20110082249 A
- US 8802774 B, Carnahan

### Non-patent literature cited in the description

- **BERNHARD WUNDERLICH.** *The Basis of Thermal Analysis, in Thermal Characterization of Polymeric Materials,* 1997, vol. 92, 277-278
- **TH.G. SCHOLTE ; N.L.J. MEIJERINK ; H.M. SCHOFFELEERS ; A.M.G. BRANDS.** *J. Appl. Polym. Sci.,* 1984, vol. 29, 3763-3782
- **E.P. OTOCKA ; R.J. ROE ; N.Y. HELLMAN ; P.M. MUGLIA.** *Macromolecules,* 1971, vol. 4, 507
- **D. LEE et al.** *J. Chromatogr. A,* 2011, vol. 1218, 7173
- **Y. BRUN ; P. FOSTER.** *J. Sep. Sci.,* 2010, vol. 33, 3501
- **CONG et al.** *Macromolecules,* 2011, vol. 44 (8), 3062-3072